# EUROPÄISCHE PATENTSCHRIFT

(11) **EP 1 678 520 B1**
(45) Veröffentlichungstag und Bekanntmachung des Hinweises auf die Patenterteilung: **24.12.2014**
(21) Anmeldenummer: 04762446.5
(22) Anmeldetag: 22.07.2004
(51) Int. Cl.: G01S 17/10, G01S 17/93, G01S 7/487

(54) **VERFAHREN UND VORRICHTUNG ZUR ENTFERNUNGSMESSUNG**
METHOD AND DEVICE FOR MEASURING DISTANCE
PROCEDE ET DISPOSITIF DE MESURE DE DISTANCES

(30) Priorität: 31.10.2003 DE 10351067
(43) Veröffentlichungstag der Anmeldung: 12.07.2006
(73) Patentinhaber: Conti Temic microelectronic GmbH, 90411 Nürnberg (DE)
(72) Erfinder: BEUSCHEL, Michael, 85134 Stammham (DE); ZÖRKLER, Gerhard, 86529 Schrobenhausen (DE)
(86) Internationale Anmeldenummer: PCT/DE2004/001596
(87) Internationale Veröffentlichungsnummer: WO 2005/045464

(56) Entgegenhaltungen:
- EP-A- 0 312 524
- WO-A-99/60419
- US-A- 4 533 241

## Beschreibung

Die Erfindung betrifft ein Verfahren zur Entfernungsmessung zwischen einem insbesondere von einem Kraftfahrzeug mitgeführten oder mitführbaren Abstandssensor und einem Objekt durch Aussenden von elektromagnetischen Impulssignalen und Empfangen vom Objekt reflektierter Signale sowie nachfolgender Ermittlung der Signallaufzeit. Die Erfindung bezieht sich weiter auf eine zur Durchführung des Verfahrens geeignete und vorgesehene Vorrichtung.

Aus der EP 0 312 524 B1 ist ein Ansatz zur Entfernungsmessung durch Verarbeitung optischer Impulssignale bekannt. Bei diesem Ansatz geht es darum, die Signalstärke der empfangenen Signale geeignet zu erhöhen, um eine einwandfreie Signalverarbeitung und damit eine Distanzmessung über den angestrebten Entfernungsbereich überhaupt mit genügender Zuverlässigkeit zu ermöglichen. Dazu wird vorgeschlagen, die empfangenen Signale in diskretisierter Form zu addieren. Dieses Addieren der jeweils auf entsprechende Abtastzeitpunkte bezogenen Abtastwerte der periodisch ausgesendeten Impulsfolgen führt zu einer Überhöhung der ausgewerteten Empfangssignale und soll damit zur angestrebten Steigerung der Empfindlichkeit der Gesamtanordnung beitragen.

Die Erfindung geht hier einen anderen Weg. Ziel ist es nämlich das empfangene Signal möglichst gut zu rekonstruieren, um auf qualifizierter Basis eine Zuordnung des empfangenem Signals zum ausgesandten Signal zu ermöglichen. Mit anderen Worten besteht die Aufgabe der Erfindung darin, ein Verfahren anzugeben, dass sich gleichzeitig einerseits durch eine ausreichend hohe Empfindlichkeit, so dass auch kleine und ggf. dunkle Objekts erkannt werden, und andererseits durch einen großen Dynamikbereich, so dass bis zu sehr kleinen Abständen wie auch bei reflektierenden Hindernissen verläßliche Meßergebnisse geliefert werden, auszeichnet.

Diese Aufgabe wird erfindungsgemäß mit den Merkmalen des Anspruchs 1 gelöst. Dazu wird bei einem Verfahren zur Entfernungsmessung zwischen einem insbesondere von einem Kraftfahrzeug mitgeführten Abstandssensor und einem Objekt durch Aussenden von elektromagnetischen Impulssignalen und Empfangen vom Objekt reflektierter Signale, wobei das vom Objekt reflektierte Signal eine zusammengehörige Folge von Pulsen umfasst, jeder Puls, um einen abgetasteten Puls zu erhalten, diskretisiert, wobei die abgetasteten Pulse addiert werden und die empfangenen Pulse vor der Diskretisierung und Addition mit einem Modulationssignal überlagert werden.

Die Erfindung geht von der Überlegung aus, dass Sensoren verwendet werden, die in jedem Meßzyklus mehrere Pulse (Pulsfolge) aussenden und dass als reflektiertes Signal gleichfalls eine Pulsfolge empfangen wird, wobei jeder empfangene Puls zur weiteren Verarbeitung abgetastet wird, um zu jedem empfangene Puls einen abgetasteten Puls und damit eine Folge abgetasteter Pulse zu erhalten.

Des Weiteren geht die Erfindung von der Erkenntnis aus, dass sich das Signal-Rausch-Verhältnis (SNR für Signal Noise Ratio) auch durch die Integration mehrerer Pulse, z.B. durch Addieren und anschließende Mittelwertbildung, unter der Voraussetzung, dass die Amplitude des analogen Rauschens geringer ist als das Quantisierungsrauschen nicht wesentlich verbessern wird.

Zum Addieren der einzelnen abgetasteten Pulse wird von jedem abgetasteten Puls der jeweils erste Abtastwert addiert, um die erste Stützstelle eines resultierenden Summenpulses zu erhalten. Dann wird von jedem abgetasteten Puls der jeweils zweite Abtastwert addiert, um die zweite Stützstelle des resultierenden Summenpulses zu erhalten, usw. Zum Bilden des Mittelwertes wird der Wert der einzelnen Stützstellen des resultierenden Summenpulses durch die Anzahl der abgetasteten Pulse dividiert. Damit ergibt sich dann als resultierendes Signal eine trotz des mit der Diskretisierung verbundenen Informationsverlusts möglichst gute Näherung des empfangenen Pulses.

Für eine gezielte Offset-Modulation des abzutastenden Signals, nämlich der Folge empfangener Pulse, werden die empfangenen Pulse mit einem weiteren analogen Signal überlagert. Die empfangenen Pulse werden vorzugsweise vor Diskretisierung, Addition und Mittelwertbildung mit dem analogen Signal überlagert.

Der Vorteil der Erfindung besteht darin, dass sich neben vorgegebenen oder vorgebbaren, zumeist äquidistanten Quantisierungsstufen zusätzliche, virtuelle Quantisierungsstufen zwischen den vorgegebenen oder vorgebbaren Quantisierungsstufen ergeben. Mit diesen virtuellen Quantisierungsstufen ergibt sich eine weitgehend gut detaillierte Darstellung der empfangenen Signale im Vergleich zu den vorgegebenen Quantisierungsstufen.

Die abhängigen Ansprüche sind auf bevorzugte Ausführungsformen der vorliegenden Erfindung gerichtet.

Bei dem überlagerten Signal, dass im Folgenden als Modulationssignal bezeichnet wird, handelt es sich um ein bekanntes, z.B. nicht stochastisch verteiltes Signal, das über einen Meßzyklus (d.h. während einer vorgebbaren oder vorgegebenen Anzahl auf zuintegrierender / zuaddierender Pulse) eine konstante Amplitudenverteilung aufweist.

Hinsichtlich des Modulationssignals werden folgende vorgegebene einzelne Eigenschaften oder Kombinationen als besonders vorteilhafte Modulationsarten verwendet.

So wird das Modulationssignal bevorzugt mit einer vorgegebenen und während einer zusammengehörigen Folge empfangener Pulse konstanten Amplitudenverteilung verwendet.

Als vorteilhaft hat sich auch herausgestellt, wenn das Modulationssignal gleichmäßig verteilt ist und dessen Amplitude einer Quantisierungsstufe bei der Diskretisierung der empfangenen Pulse oder einem ganzzahligen Vielfachen einer solchen Quantisierungsstufe entspricht.

Des Weiteren ist es vorteilhaft, wenn die Anzahl der zusammengehörigen, abgetasteten Pulse und die Anzahl der vom Modulationssignal überstrichenen Quantisierungsstufen teilerfremd ist. Zweckmäßigerweise wird ein mittelwertfreies Modulationssignal verwendet.

Als ein besonders bevorzugtes Modulationssignal, das alle diese Eigenschaften vereint und hinsichtlich der Amplitude leicht auf die gewünschten Verhältnisse einstellbar und zudem insgesamt mit nur geringem Aufwand generierbar ist, wird ein Sägezahnsignal verwendet.

Anstelle der Überlagerung der empfangenen Signale mit dem Modulationssignal kommt auch eine Verschiebung der Quantisierungsstufen in Abhängigkeit von einem Modulationssignal der oben beschriebenen Art in Betracht. In ähnlicher Weise wird auch eine Skalierung der empfangenen Pulse in Abhängigkeit von einem Modulationssignal der oben beschriebenen Art ausgeführt. Alternativ oder zusätzlich wird eine Phasenverschiebung der empfangenen Pulse in Abhängigkeit von einem Modulationssignal der oben beschriebenen Art ausgeführt. Als eine weitere bevorzugte Ausführungsform wird die zeitliche Lage der ausgesendeten Impulssignale und/oder die Signallaufzeit in Abhängigkeit von einem Modulationssignal der oben beschriebenen Art variiert.

Bezüglich der Vorrichtung wird die genannte Aufgabe erfindungsgemäß gelöst durch die Merkmale des Anspruchs 11. Die Vorrichtung umfasst einen insbesondere von einem Kraftfahrzeug mitgeführten oder mitführbaren Abstandssensor mit Sender und Empfänger, wobei der Sender zum Aussenden von elektromagnetischen Impulssignalen und der Empfänger zum Empfangen von an einem Objekt reflektierten Signalen in Form einer zusammengehörigen Folge von Pulsen vorgesehen ist. Weiter umfasst die Vorrichtung ein Modulationsmittel zur Überlagerung der empfangenen Pulse mit einem Modulationssignal, Diskretisierungsmittel, z.B. einen an sich bekannten Analog-DigitalWandler (kurz AD-Wandler genannt) zum Diskretisieren jedes Pulses, um einen abgetasteten Puls zu erhalten, sowie Verarbeitungsmitteln, z.B. einen Mikroprozessor, Mikrocontroller, ASIC, oder dergleichen, zum Addieren der abgetasteten Pulse.

Der Vorteil der Erfindung und ihrer Ausgestaltungen besteht insbesondere darin, dass ein besonders einfacher und somit kostengünstiger AD-Wandler mit geringer Amplituden-Auflösung für einen großen Dynamikbereich eingesetzt werden kann.

Nachfolgend wird ein Ausführungsbeispiel der Erfindung anhand einer Zeichnung näher erläutert.

Darin zeigen:
- FIG 1: ein sich in Richtung eines Objekts bewegendes Kraftfahrzeug mit einer Einrichtung zur Detektion des Obj ekts,
- FIG 2: eine Folge von nach Reflexion an einem Objekt empfangener Pulse über einer Zeitachse,
- FIG 3: eine bekannte Abtastung oder Diskretisierung der empfangenen Pulse,
- FIG 4: einen Summenpuls als Ergebnis einer bekannten Addition der abgetasteten Pulse,
- FIG 5: eine Variante des erfindungsgemäßen Verfahrens mit Einbeziehung eines Modulationssignals,
- FIG 6: eine Abtastung der mit dem Modulationssignal beaufschlagten empfangenen Pulse,
- FIG 7: eine Darstellung eines sich nach Addieren und Bilden des Mittelwertes der Pulse ergebenden Signals,
- FIG 8: eine Skalierung der empfangenen Pulse mit dem Modulationssignal,
- FIG 9: eine Skalierung der Quantisierungsstufen in Abhängigkeit von dem Modulationssignal.

Einander entsprechende Gegenstände oder Elemente sind in allen Figuren mit den gleichen Bezugszeichen versehen.

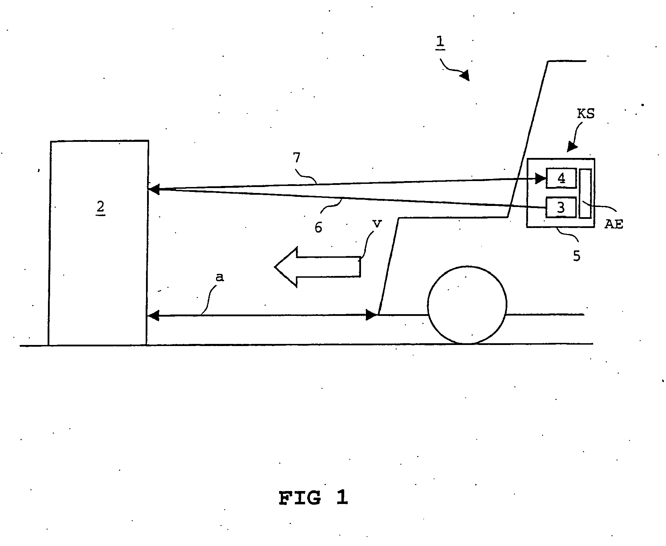

FIG 1 zeigt in schematischer Darstellung ein Kraftfahrzeug 1, das sich auf ein Objekt 2 zu bewegt. Das Fahrzeug verfügt über ein Kollisionserkennungs-, -warnungs- oder - vermeindungsystem, im Folgenden zusammenfassend als Kollisionserkennungssystem KS oder kurz als Kollisionserkennung bezeichnet. Das Kollisionserkennungssystem KS umfasst zumindest einen Sender 3 und einen Empfänger 4. Der Sender 3 und der Empfänger 4 bilden zusammen mit einer Auswerteelektronik AE einen Abstands- und/oder Geschwindigkeitssensor 5, im folgenden kurz als Abstandssensor 5 bezeichnet.

Der Sender 3 sendet während eines Messzyklus ein elektromagnetisches Impulssignal 6, d.h. der Sender 3 sendet während des Messzyklus eine Folge von Einzelsignalen - im Folgenden auch kurz als Signal 6 bezeichnet - aus. Wenn das Signal 6 auf ein Objekt 2 trifft, wird es an dem Objekt 2 reflektiert. Ein daraus resultierendes reflektiertes Signal 7 gelangt zum Empfänger 4, so dass in an sich bekannter Weise anhand des ausgesandten Signals 6 und des reflektierten Signals 7 der Abstands a des Objekts 2 vom Fahrzeug 1 ermittelt wird. Anhand der bekannten Geschwindigkeit v des Fahrzeugs 1 ist es möglich, die Zeitdauer bis zu einer eventuellen Kollision mit dem Objekt 2 zu ermitteln sowie in Abhängigkeit davon geeignete Maßnahmen zur Vermeidung der Kollision oder zur Minimierung der Auswirkungen der Kollision, also z.B. eine Warnung für den Fahrer, ein automatischer Eingriff in das Lenkund/oder Bremssystem des Fahrzeugs, etc., zu treffen.

Ist das Objekt 2 selbst beweglich, etwa wenn es sich um ein weiteres Fahrzeug, z.B. um ein entgegenkommendes Fahrzeug handelt, kann nicht nur die Entfernung zu dem Objekt 2, sondern aus der zeitlichen Änderung der Entfernung oder des Abstands a und gleichzeitiger Berücksichtigung der Momentangeschwindigkeit des eigenen Fahrzeugs 1 die Geschwindigkeit des Objekts 2 ermittelt werden und aus Entfernung und Geschwindigkeit des Objekts 2 sowie eigener Geschwindigkeit wiederum eine evtl. Kollisionsgefahr sowie die Dauer bis zu einer evtl. Kollision ermittelt werden.

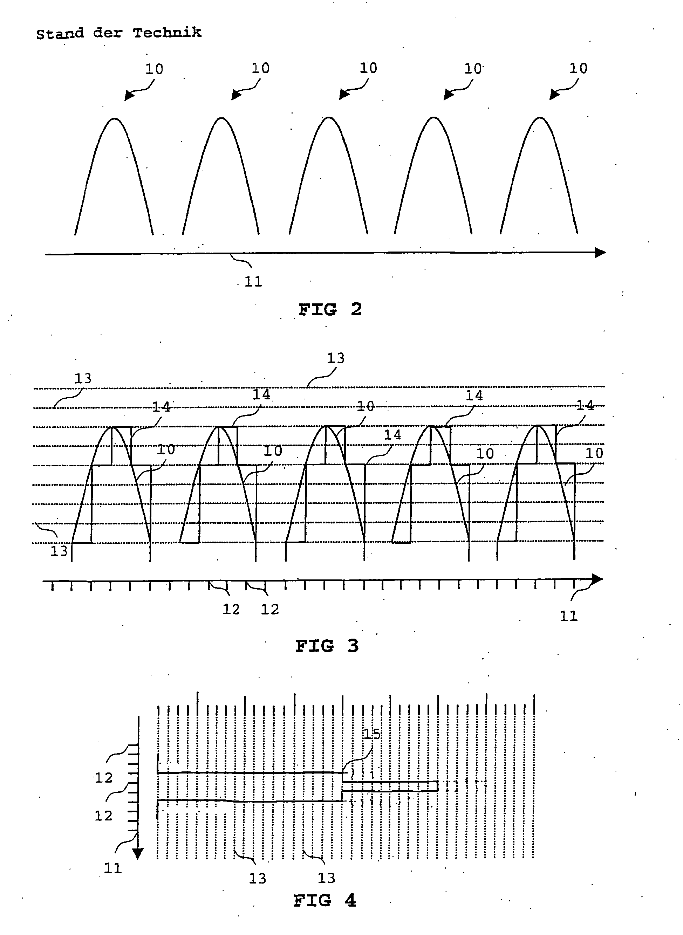

FIG 2 zeigt das reflektierte Signal 7 als eine Folge von empfangener Pulse 10 über einer Zeitachse 11. Der Sender 3 sendet dazu während jeweils eines Messzyklus als Signal 6 eine Folge von Pulsen aus, die nach der Reflexion am Objekt 2 vom Empfänger 4 als reflektierte Signale 7 und Folge von empfangenen Pulsen 10 empfangen werden. Die darstellte Folge von empfangenen Pulsen 10 stellt sich am Empfänger 4 ein. Dies ist im Stand der Technik bekannt.

Gleichfalls ist im Stand der Technik die in FIG 3 dargestellte Abtastung oder Diskretisierung der empfangenen Pulse 10 bekannt. Dazu wird entlang der Zeitachse 11 in äquidistanten Abtastzeitpunkten 12 der momentane Wert des jeweils empfangenen Pulses 10 bezogen auf vorgegebene oder vorgebbare, äquidistante Quantisierungsstufen 13 ermittelt. Durch diese Abtastung ergibt sich zu jedem empfangenen Puls 10 ein abgetasteter Puls 14.

Wie in FIG 4 als ebenfalls im Stand der Technik bekannt dargestellt, werden die abgetasteten Pulse 14 zu einem Summenpuls 15 addiert um eine Überhöhung der ausgewerteten Empfangssignale, also der empfangenen Pulse 10, zu erreichen. Eine Erhöhung der Dynamik des empfangenen Signals ist damit nicht erreicht, denn nach wie vor liegt jeder einzelne Stützpunkt des Summenpulses 15 auf einer der äquidistanten Quantisierungsstufen 13. Es handelt sich also um ein lediglich gestrecktes Signal; der zusätzliche Informationsgehalt aufgrund einer quasi gleichzeitigen Betrachtung einer Folge von empfangenen Pulsen 10 wird nicht genutzt.

Aus Gründen der Übersichtlichkeit ist die Darstellung in FIG 4 im Vergleich zu den Darstellungen in FIGen 2 und 3 um 90° gedreht, d.h. die Zeitachse 11 verläuft vertikal.

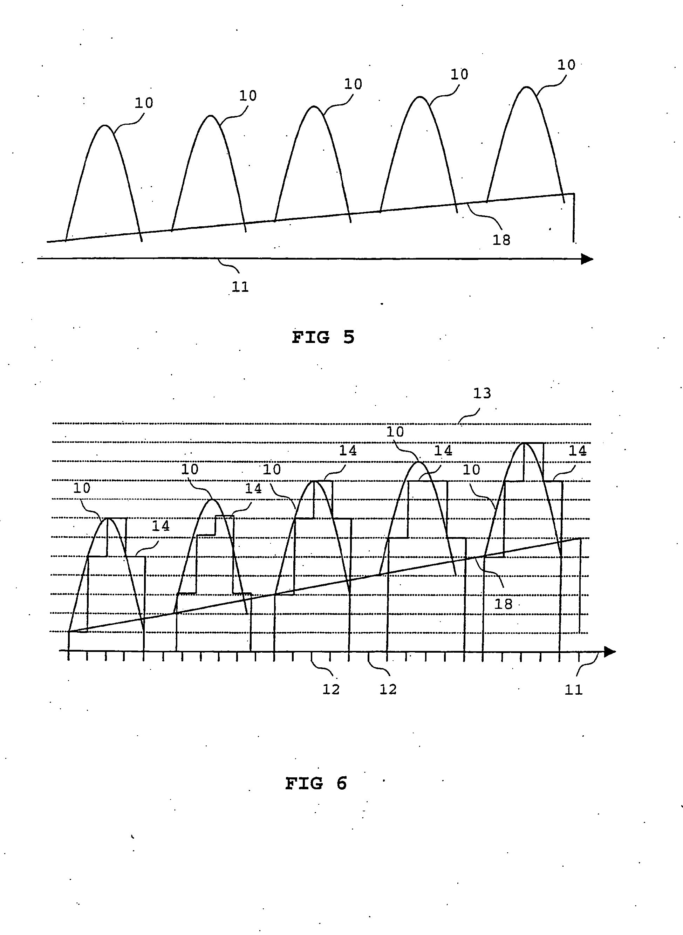

FIG 5 zeigt eine Variante des erfindungsgemäßen Verfahrens. Danach wird bei einer Folge von empfangenen Pulsen 10 jeder empfangene Puls 10 um dem jeweils aktuellen Wert eines Modulationssignals 18 erhöht. Als Modulationssignal 18 ist dabei ein Sägezahnsignal dargestellt. Das Erhöhen des jeweiligen Pulses 10 geschieht durch Addition der empfangenen Pulse 10 und des Modulationssignals 18. Für die Addition kann entweder das Modulationssignal 18 in der dargestellten, also periodisch kontinuierlich steigenden Form oder für jeden empfangenen Puls 10 konstant der Wert des. Modulationssignals 18 bei Beginn des empfangenen Pulses 10 verwendet werden. Im letzteren Fall würde das sägezahnförmige Modulationssignal 18 auf ein periodisches, stufenförmiges Modulationssignal (nicht dargestellt) reduziert.

Die Verwendung des dargestellten kontinuierlich steigenden Modulationssignals 18 würde zu einer linearen Verzerrung der einzelnen empfangenen Pulse 10 führen, weil der jeweilige Summand, mit dem der empfangene Puls 10 beaufschlagt wird, mit zunehmender Dauer des Pulses 10 größer wird. Diese lineare Verzerrung, die durchaus gewünscht sein kann, wird besonders einfach vermieden, indem anstelle des kontinuierlich steigenden Modulationssignals 18 die stufenförmige Variante des Modulationssignals verwendet wird. Dabei wird jeweils zu Beginn eines Pulses 10 der aktuelle Wert des Modulationssignals 18 ermittelt und der empfangene Puls 10 während seiner kompletten Dauer mit diesem (konstanten) Wert beaufschlagt. Dargestellt ist in FIG 5 die Situation, bei der die empfangenen Pulse 10 jeweils mit einem konstanten Wert in Abhängigkeit vom Modulationssignal 18 beaufschlagt werden.

FIG 6 zeigt, dass auch die mit dem Modulationssignal 18 beaufschlagten empfangenen Pulse 10 abgetastet werden, so dass sich zu jedem empfangenen Puls 10 ein abgetasteter Puls 14 ergibt. Die einzelnen abgetasteten Pulse 14 werden wiederum addiert und aus dem sich so ergebenden Summenpuls (nicht dargestellt) der Mittelwert gebildet um ein resultierendes Signal 16 zu erhalten.

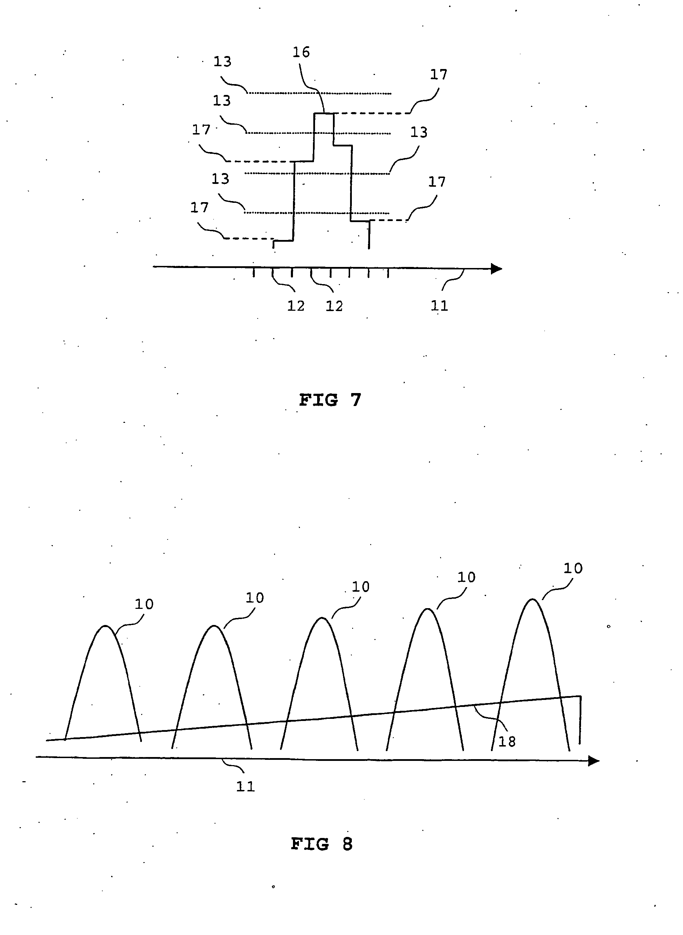

FIG 7 zeigt eine Darstellung eines sich nach Addieren und Überlagerung des empfangenen Pulses 10 mit dem Modulationssignal 18 ergebenden Signals 16. Hierbei ergibt sich das resultierende Signal 16 aus Stützstellen, die zwischen den äquidistanten Quantisierungsstufen 13 liegen können. Mit anderen Worten: Es ergeben sich in vorteilhafter Weise "virtuelle Quantisierungsstufen" 17 zwischen den äquidistanten Quantisierungsstufen 13. Dies entspricht quasi einer Abtastung der Folge von Pulsen 10 mit einer sehr feinen, mit zunehmender Anzahl der Pulse 10 innerhalb der jeweils betrachteten Pulsfolge gegen Null gehenden Diskretisierungsweite. Im Ergebnis führt dies zu einer erheblich höheren Auflösung der empfangenen Pulse 10 durch die höhere Diskretisierung des resultierenden Signals 16 als Abbild der empfangenen Pulse 10. Man kann ohne weiteres erkennen, dass das resultierende Signal 16 einen empfangenen Puls 10 sehr viel genauer nachbildet als jeder abgetastete Puls 14.

Ähnliches ergibt sich, wenn, wie in FIG 8 dargestellt, die empfangenen Pulse 10 mit dem jeweils aktuellen Wert des Modulationssignals 18 vorteilhafterweise skaliert werden. Dies ermöglicht in einfacher Form eine Amplitudenmodulation der empfangenen Pulse 10. Die skalierten empfangenen Pulse 10 werden wiederum (nicht dargestellt) entsprechend der Quantisierungsstufen 13 abgetastet, so dass sich abgetastete Pulse 14 ergeben. Diese werden addiert. Das sich dann ergebende resultierende Signal (nicht separat dargestellt) umfasst wie das in FIG 7 dargestellte resultierende Signal 16 Stützstellen auf virtuellen Quantisierungsstufen 17.

Die additive Beaufschlagung der empfangenen Pulse 10 mit dem Modulationssignal 18, wie in FIG 6 dargestellt, kann auch als "Offset-Modulation" bezeichnet werden. Die multiplikative Beaufschlagung der empfangenen Pulse 10 mit dem Modulationssignal 18, wie in FIG 8 dargestellt, wird auch als "Amplituden-modulation" bezeichnet.

Bei der Amplitudenmodulation wird der gewünschte Effekt näherungsweise erzielt, da die Wirkung von der Amplitude des Modulationssignals 18 abhängt. Erfolgt die Modulation jedoch über einen ausreichend großen Skalierungsbereich, ergeben sich auch nach dieser Variante der Erfindung zusätzliche virtuelle Quantisierungsstufen 17. Die Amplitudenmodulation wirkt sich vor allem im Bereich der Pulsmitte (im so genannten Peak) aus.

Eine Variante besteht darin, dass nicht die empfangenen Pulse 10 sondern das den empfangenen Pulsen 10 zugrunde liegende ausgesandte Impulssignals oder Signal 6 in der in FIG 8 gezeigten Art und Weise skaliert wird.

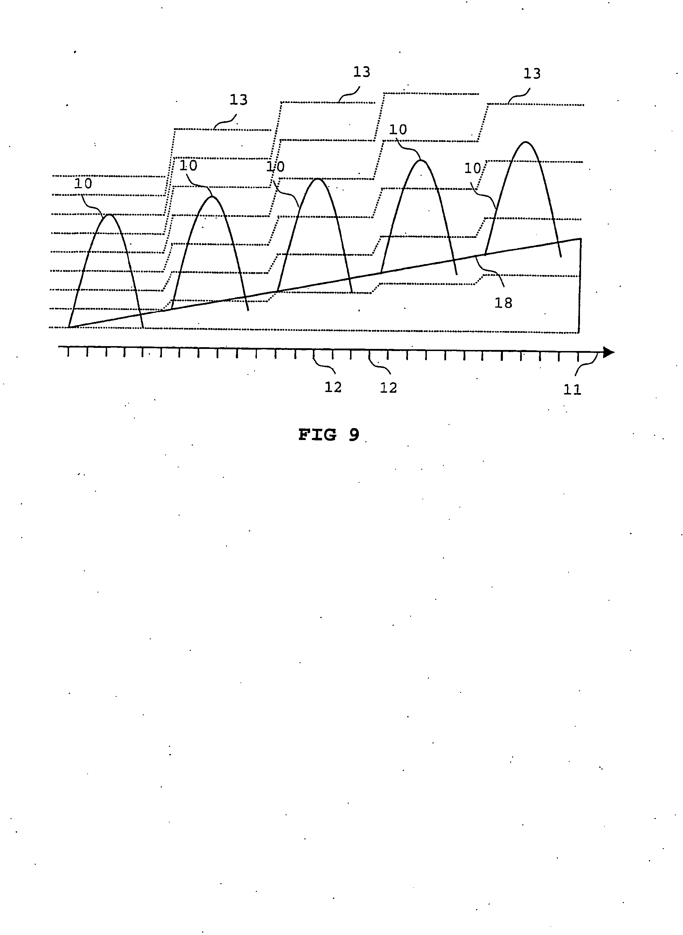

Eine weitere Variante ergibt sich, wenn anstelle der empfangenen Pulse 10 die Quantisierungsstufen 13 in Abhängigkeit vom Modulationssignal 18 skaliert oder verschoben werden. Diese Skalierung der Quantisierungsstufen 13 in Abhängigkeit vom Modulationssignal 18 ist schematisch in FIG 9 dargestellt. Die empfangenen Pulse 10 werden vorzugsweise anhand der während der Folge von empfangenen Pulsen 10 nicht mehr äquidistanten Quantisierungsstufen 13 abgetastet. Dadurch ergeben sich auch unterschiedliche Formen der jeweils abgetasteten Pulse (nicht mehr separat dargestellt). Allgemein kann gesagt werden, dass die letzten empfangenen Pulse 10 innerhalb einer Folge zusammengehöriger empfangener Pulse 10 zunehmend gröber abgetastet werden. Durch die Summation und überlagerte Modulation ergibt sich aufgrund der jeweils unterschiedlichen Form der abgetasteten Impulse wieder eine Vielzahl virtueller Quantisierungsstufen 17.

Schließlich ergibt sich eine Variante der Erfindung auch dadurch, dass der Abstand der Abtastzeitpunkte 12 in Abhängigkeit vom Modulationssignal 18 skaliert wird. Diese Variante entspricht im Prinzip der in FIG 9 dargestellten Variante, bei der der Abstand der Quantisierungsstufen 17 in Abhängigkeit vom Modulationssignal 18 skaliert ist. Die Skalierung des Abstands der Abtastzeitpunkte 12 ist daher nicht separat dargestellt. Auch bei dieser Variante wird jeder empfangene Puls 10 zu den sich jeweils ergebenden Abtastzeitpunkten 12 abgetastet, um abgetastete Pulse 14 zu erhalten. Diese werden wiederum addiert, so dass sich nach Mittelwertbildung ein resultierendes Signal mit zusätzlichen virtuellen Quantisierungsstufen 17 ergibt. Auch diese Variante erzielt den gewünschten Effekt näherungsweise, da die Wirkung vom zeitlichen Gradienten des Modulationssignals 18 am jeweiligen Abtastzeitpunkt 12 abhängt.

Erfolgt die Skalierung über einen ausreichend großen Bereich, können auch nach dieser Variante zusätzliche virtuelle Quantisierungsstufen 17 dargestellt werden. Diese Variante wirkt sich vornehmlich auf die Pulsflanken aus. Darüber hinaus wird diese Variante zur Unterscheidung von den vorstehend beschriebenen Varianten als Phasenmodulation bezeichnet.

Eine zusätzliche Variante ergibt sich, wenn statt der Abtastzeitpunkte 12 die zeitliche Lage der Pulse des ausgesandten Impulssignals 6 oder die Signallaufzeit variiert wird.

Weitere Varianten ergeben sich durch sinnvolle Kombinationen einzelner oder mehrerer der vorstehend beschriebenen Varianten. Vorteilhaft ist z.B. eine Kombination einer Amplitudenmodulation und einer Phasenmodulation mit jeweils individuellen Modulationssignalen 18, da durch die Amplitudenmodulation das Zentrum der empfangenen Pulse 10 und durch die Phasenmodulation die Flanken der empfangenen Pulse 10 feiner aufgelöst werden.

Damit läßt sich die Erfindung kurz wie folgt darstellen:
Es wird ein Verfahren zur Entfernungsmessung zwischen einem insbesondere von einem Kraftfahrzeug mitgeführten Abstandssensor und einem Objekt durch Aussenden von elektromagnetischen Impulssignalen und Empfangen vom Objekt reflektierter Signale sowie nachfolgender Ermittlung der Signallaufzeit sowie eine zu dessen Ausführung geeignete Vorrichtung angegeben, wobei nach Reflexion an dem Objekt empfangene Pulse diskretisiert und addiert werden, wobei bei Ausgestaltungen des Verfahrens die empfangenen Pulse mit einem Modulationssignal beaufschlagt oder überlagert werden.

### Bezugszeichenliste

- 1: Fahrzeug
- 2: Objekt
- 3: Sender
- 4: Empfänger
- 5: Abstandssensor
- 6: Impulssignal
- 7: Reflexion

- 10: empfangener Puls
- 11: Zeitachse
- 12: Abtastzeitpunkt
- 13: Quantisierungsstufe
- 14: abgetasteter Puls
- 15: Summenpuls
- 16: resultierendes Signal
- 17: virtuelle Quantisierungsstufe
- 18: Modulationssignal

- a: Abstand
- AE: Auswerteelektronik
- KS: Kollisionserkennungssystem
- v: Geschwindigkeit des Fahrzeugs 1

## Patentansprüche

1. Verfahren zur Entfernungsmessung zwischen einem insbesondere von einem Kraftfahrzeug (1) mitgeführten Abstandssensor (5) und einem Objekt (2) durch Aussenden von elektromagnetischen Impulssignalen (6) und Empfangen vom Objekt (2) reflektierter Signale (7), wobei das vom Objekt (2) reflektierte Signal (7) eine zusammengehörige Folge von Pulsen (10) umfasst, jeder Puls (10), um einen abgetasteten Puls (14) zu erhalten, diskretisiert wird und die abgetasteten Pulse (14) addiert werden,
**dadurch gekennzeichnet,**
**dass** die empfangenen Pulse (10) vor der Diskretisierung und Addition mit einem Modulationssignal (18) überlagert werden.

2. Verfahren nach Anspruch 1,
wobei das Modulationssignal (18) eine vorgegebene und während einer zusammengehörigen Folge empfangener Pulse (10) konstante Amplitudenverteilung aufweist.

3. Verfahren nach Anspruch 2,
wobei das Modulationssignal (18) zeitlich gleichmäßig - verteilt ist und dessen Amplitude einer Quantisierungsstufe (13) bei der Diskretisierung der empfangenen Pulse (10) oder einem ganzzahligen Vielfachen einer solchen Quantisierungsstufe (13) entspricht.

4. Verfahren nach Anspruch 3,
wobei die Anzahl der zusammengehörigen, abgetasteten Pulse (14) und die Anzahl der vom Modulationssignal (18) überstrichenen Quantisierungsstufen (13) teilerfremd ist.

5. Verfahren nach einem der Ansprüche 1 bis 4,
wobei das Modulationssignal (18) mittelwertfrei ist.

6. Verfahren nach einem der Ansprüche 1 bis 5,
wobei das Modulationssignal (18) ein Sägezahnsignal ist.

7. Verfahren nach Anspruch 1,
wobei die Quantisierungsstufen (13) in Abhängigkeit von einem Modulationssignal (18) nach einem der Ansprüche 2 bis 6 verschoben oder skaliert werden.

8. Verfahren nach Anspruch 1,
wobei die empfangenen Pulse (10) in Abhängigkeit von einem Modulationssignal (18) nach einem der Ansprüche 2 bis 6 skaliert werden.

9. Verfahren nach Anspruch 1,
wobei die empfangenen Pulse (10) in Abhängigkeit von einem Modulationssignal (18) nach einem der Ansprüche 2 bis 6 phasenverschoben werden.

10. Verfahren nach Anspruch 1,
wobei die zeitliche Lage der ausgesendeten Impulssignale (6) und/oder die Signallaufzeit in Abhängigkeit von einem Modulationssignal (18) nach einem der Ansprüche 2 bis 6 variiert wird.

11. Vorrichtung zur Durchführung eines Verfahrens nach einem der Ansprüche 1 bis 10,
mit einem insbesondere von einem Kraftfahrzeug (1) mitführbaren Abstandssensor (5) mit Sender (3) und Empfänger (4), wobei der Sender (3) zum Aussenden von elektromagnetischen Impulssignalen (6) und der Empfänger (4) zum Empfangen von an einem Objekt (2) reflektierten Signalen (7) in Form einer zusammengehörigen Folge von Pulsen (10) vorgesehen ist, mit einem Modulationsmittel zur Überlagerung der empfangenen Pulse (10) mit einem Modulationssignal (18), mit Diskretisierungsmitteln zum Diskretisieren jedes Pulses (10) um einen abgetasteten Puls (14) zu erhalten und mit Verarbeitungsmitteln zum Addieren der abgetasteten Pulse (14).

## Claims

1. A method for measuring the distance between a distance sensor (5) which is in particular arranged in/on a motor vehicle (1) and an object (2) by emitting electromagnetic pulse signals (6) and receiving signals (7) reflected by the object (2), wherein the signal (7) reflected by the object (2) comprises a series of pulses (10) belonging together, each pulse (10) is discretized in order to obtain a scanned pulse (14) and the scanned pulses (14) are added,
**characterized in that**
a modulation signal (18) is superimposed on the received pulses (10) prior to their discretization and addition.

2. The method according to claim 1,
wherein the modulation signal (18) has a predefined amplitude distribution which is constant during a series of received pulses (10) belonging together.

3. The method according to claim 2,
wherein the modulation signal (18) is evenly distributed over time, and its amplitude corresponds to a quantization stage (13) in the discretization of the received pulses (10) or to an integer multiple of such a quantization stage (13).

4. The method according to claim 3,
wherein the number of scanned pulses (14) belonging together and the number of quantization stages (13) covered by the modulation signal (18) are relatively prime.

5. The method according to any one of claims 1 to 4,
wherein the mean value of the modulation signal (18) is zero.

6. The method according to any one of claims 1 to 5,
wherein the modulation signal (18) is a serrated signal.

7. The method according to claim 1,
wherein the quantization stages (13) are shifted or scaled in accordance with a modulation signal (18) according to any one of claims 2 to 6.

8. The method according to claim 1,
wherein the received pulses (10) are scaled in accordance with a modulation signal (18) according to any one of claims 2 to 6.

9. The method according to claim 1,
wherein the received pulses (10) are phase-shifted in accordance with a modulation signal (18) according to any one of claims 2 to 6.

10. The method according to claim 1,
wherein the position in time of the emitted pulse signals (6) and/or the signal propagation speed is/are varied in accordance with a modulation signal (18) according to any one of claims 2 to 6.

11. A device for carrying out a method according to any one of claims 1 to 10,
comprising a distance sensor (5) which includes a transmitter (3) and a receiver (4) and can in particular be arranged in/on a motor vehicle (1), wherein the transmitter (3) is provided for emitting electromagnetic pulse signals (6) and the receiver (4) is provided for receiving signals (7) which are reflected on an object (2) and are in the form of a series of pulses (10) belonging together, and comprising a modulation means for superimposing a modulation signal (18) on the received pulses (10), discretization means for discretizing each pulse (10) in order to obtain a scanned pulse (14) and processing means for adding the scanned pulses (14).

## Revendications

1. Procédé de mesure d'éloignement entre un capteur de distance (5) transporté en particulier par un véhicule automobile (1) et un objet (2) par l'émission de signaux d'impulsion (6) électromagnétiques et la réception de signaux (7) réfléchis par l'objet (2), le signal (7) réfléchi par l'objet (2) comprenant un suite d'impulsions (10) appartenant à un même ensemble, chaque impulsion (10) étant discrétisée pour obtenir une impulsion échantillonnée (14), et les impulsions échantillonnées (14) étant additionnées,
**caractérisé en ce**
**qu'**un signal de modulation (18) se superpose aux impulsions (10) reçues avant la discrétisation et l'addition.

2. Procédé selon la revendication 1,
le signal de modulation (18) présentant une répartition d'amplitudes prédéfinie et constante pendant une suite d'impulsions reçues appartenant à un même ensemble.

3. Procédé selon la revendication 2,
le signal de modulation (18) étant réparti uniformément dans le temps, et son amplitude correspondant à un niveau de quantification (13) lors de la discrétisation des impulsions (10) reçues ou à un multiple entier d'un tel niveau de quantification (13).

4. Procédé selon la revendication 3,
le nombre d'impulsions échantillonnées appartenant à un même ensemble et le nombre de niveaux de quantification (13) balayés par le signal de modulation (18) sont premiers entre eux.

5. Procédé selon une des revendications 1 à 4,
le signal de modulation (18) étant exempt de valeur moyenne.

6. Procédé selon une des revendications 1 à 5,
le signal de modulation (18) étant un signal en dents de scie.

7. Procédé selon la revendication 1,
les niveaux de quantification (13) étant déplacés ou mis à l'échelle en fonction d'un signal de modulation (18) selon une des revendications 2 à 6.

8. Procédé selon la revendication 1,
les impulsions (10) reçues étant mises à l'échelle en fonction d'un signal de modulation (18) selon une des revendications 2 à 6.

9. Procédé selon la revendication 1,
les impulsions (10) reçues étant déphasées en fonction d'un signal de modulation (18) selon une des revendications 2 à 6.

10. Procédé selon la revendication 1,
la position dans le temps des signaux d'impulsion (6) émis et/ou le temps de propagation des signaux étant modifié(e) en fonction d'un signal de modulation (18) selon une des revendications 2 à 6.

11. Dispositif de réalisation d'un procédé selon une des revendications 1 à 10, avec un capteur de distance (5) pouvant être transporté en particulier par un véhicule automobile (1), avec émetteur (3) et récepteur (4), l'émetteur (3) étant prévu pour l'émission de signaux d'impulsion (6) électromagnétiques et le récepteur (4) étant prévu pour la réception de signaux (7) réfléchis sur un objet sous forme d'une suite d'impulsions (10) appartenant à un même ensemble, avec un moyen de modulation pour superposer un signal de modulation (18) aux impulsions (10) reçues, avec des moyens de discrétisation pour la discrétisation de chaque impulsion (10) pour obtenir une impulsion (14) échantillonnée, et avec des moyens de traitement pour l'addition des impulsions (14) échantillonnées.
